# EUROPEAN PATENT SPECIFICATION

(11) **EP 1 166 845 B1**
(45) Date of publication and mention of the grant of the patent: **23.03.2005**
(21) Application number: 01305579.3
(22) Date of filing: 27.06.2001
(51) Int. Cl.: B01D 53/00, B01D 53/02, B01D 53/04, B01D 53/26, F23J 3/04, C01B 21/04

(54) **Process for purifying gases**
Verfahren zur Reinigung von Gasen
Procédé pour la purification de gaz

(30) Priority: 29.06.2000 US 606886
(43) Date of publication of application: 02.01.2002
(73) Proprietor: THE BOC GROUP, INC., Murray Hill, New Providence, New Jersey 07974-2082 (US)
(72) Inventor: Kumar, Ravi, Allentown, Pennsylvania 18103 (US); Deng, Shuguang, Hillsborough, New Jersey 08844 (US)
(74) Representative: Wickham, Michael

(56) References cited:
- EP-A- 0 904 823
- US-A- 5 202 096
- US-A- 6 048 509
- US-A- 6 077 488

## Description

The present invention relates to a method for removing gaseous impurities from a feed gas stream, for example, in a temperature swing adsorption pre-purification unit. More particularly, the present invention provides for a method to remove H₂, H₂O, CO, CO₂ and optionally hydrocarbons and oxides of nitrogen from gas feeds streams such as air.

High purity gases such as nitrogen in which impurities are present in amounts well below part per million levels are required, for example, in the manufacture of integrated circuits to prevent defects in chips of increasing line densities. Cryogenic distillation is typically used for the production of highly purified nitrogen gas.

Removal of impurities from the feed gas for cryogenic distillation is required for the production of high purity nitrogen. When air is used as the feed gas, impurities, such as H₂O and CO₂, are removed to prevent freeze-up in the low temperature sections of the plant while other impurities, such as H₂ and CO, have to be removed to prevent contamination of the nitrogen product.

A two-step procedure has been employed for the removal of these impurities from air in a nitrogen production process. In the first step, a compressed feed gas is heated to temperatures between 150° to 250°C. and then contacted with a catalyst to oxidize CO to CO₂ and H₂ to H₂O. Noble metal catalysts, typically based on platinum, are commonly used for the oxidation step. In the second step, the oxidization products, CO₂ and H₂O, are removed from the compressed gas stream either by a temperature-swing or pressure swing adsorption process.

These processes, although effective, are disadvantageous for the commercial scale production of highly purified gases, particularly nitrogen gas due to their high cost of operation. The cost of operation is high because of the extensive use of expensive noble metal catalysts. In addition, separate vessels must be used for the catalytic treatment step and the adsorption step to remove the impurities. In addition, heat exchangers are required to both heat the gas as it passes into the catalyst vessel and cool the effluent therefrom. This poses additional costs, both in terms of equipment and energy.

Ambient temperature processes for removing parts per million levels of impurities from inert gas streams are also known in the art. In particular, EP-A-438 282 discloses employing catalysts to oxidise carbon monoxide and hydrogen impurities at ambient temperature. The catalysts are located between an upstream adsorbent of water vapour and a downstream adsorbent of carbon dioxide and water vapour. Catalytic oxidation of carbon monoxide therefore takes place in the presence of carbon dioxide.

US patent 6048209 describes a method for purifying a gas such as air which contains water, carbon monoxide and carbon dioxide as impurities by conducting the sequential steps of oxidising carbon monoxide to form carbon dioxide, adsorbing and removing water, and adsorbing and removing carbon dioxide. If hydrogen is present the method includes the further step of catalytic oxidation of the hydrogen to form water and finally the step of adsorbing and removing the water.

Our earlier case EP-A-904823 describes an air pre-purification process which uses a combination of pressure swing adsorption (PSA) and temperature swing adsorption (TSA) to remove carbon dioxide and any water vapour present in the air stream. Optionally carbon monoxide, hydrogen and hydrocarbons may also be removed. The PSA step, which precedes the TSA step, uses a bed of adsorbent including activated alumina to remove water vapour and at least 75% of the carbon dioxide.

The TSA step uses an adsorbent bed to remove substantially all of the remaining carbon dioxide.

The present inventors have discovered that the use of a multi-layer bed where the trace impurities, primarily CO₂, are removed or significantly reduced prior to contacting the gaseous feedstream with the H₂ catalyst will improve the performance of the H₂ catalyst. This not only improves overall performance but also reduces the amount of H₂ catalyst necessary in the process.

According to a first aspect of the present invention there is provided a process for producing a gaseous product substantially purified from impurities comprising hydrogen, carbon monoxide, carbon dioxide and water vapour comprising the steps of:
a) removing water vapor from a gaseous feedstream containing impurities;
b) contacting the gaseous feedstream with an oxidation catalyst to convert CO to CO₂;
c) removing CO₂ from the gaseous feedstream of steps (a) and (b);
d) contacting the gaseous feedstream of step (c) with an oxidation catalyst to convert H₂ to H₂O; and
e) removing H₂O from the gaseous feedstream of step (d), thereby obtaining the substantially purified gaseous product.

Optionally, an additional stage can be added between steps (c) and (d) whereby hydrocarbons and oxides of nitrogen are removed from the gaseous feedstream.

Instead of removing carbon dioxide upstream of the catalytic carbon monoxide oxidation step, it may be removed downstream thereof.

According to a second aspect of the present invention there is provided a process for producing a gaseous product substantially purified from impurities comprising hydrogen, carbon monoxide, water vapour and carbon dioxide, comprising the steps of:
a) removing water vapor from the gaseous feedstream containing impurities;
b) removing CO₂ from the gaseous feedstream of step (a);
c) contacting the gaseous feedstream of step (b) with an oxidation catalyst to convert CO to CO₂;
d) contacting the gaseous feedstream of step (c) with an oxidation catalyst to convert H₂ to H₂O;
e) removing H₂O and CO₂ from the gaseous feedstream of steps ( c) and (d), thereby obtaining the substantially purified gaseous product.

Optionally, the additional adsorptive stage to remove hydrocarbons and oxides of nitrogen from the gaseous feedstream may be added between steps (b) and (c).

Typically, the gaseous product obtained is air in a temperature swing adsorption (TSA) process prior to the air being fed to a cryogenic distillation unit in an air separation unit (ASU). The regeneration gas employed in a typical TSA process needs to be free of H₂, CO, CO₂, H₂O, oxides of nitrogen and hydrocarbons.

The gaseous feedstream is treated in a single treatment zone, preferably in a single vessel which includes two catalyst sections and three adsorbent sections. The first section contains one or more beds of a water-removing adsorbent such as activated alumina, silica gel, zeolites, or combinations thereof. The first catalytic layer for converting CO to CO₂ may be a mixture of manganese and copper oxides or nickel oxides.

The second adsorbent section contains an adsorbent for removing CO₂ from a gaseous feedstream. This adsorbent may be zeolites, activated alumina, silica gel and combinations thereof.

The section of the vessel used for converting H₂ to H₂O contains an oxidation catalyst. This catalyst is preferably a noble metal catalyst such as supported palladium. The last layer contains an adsorbent for removing water and/or carbon dioxide which may be zeolites, activated alumina, silica gel and combinations thereof.

The process according to the invention will now be described by way of example with reference to the accompanying drawing, in which:

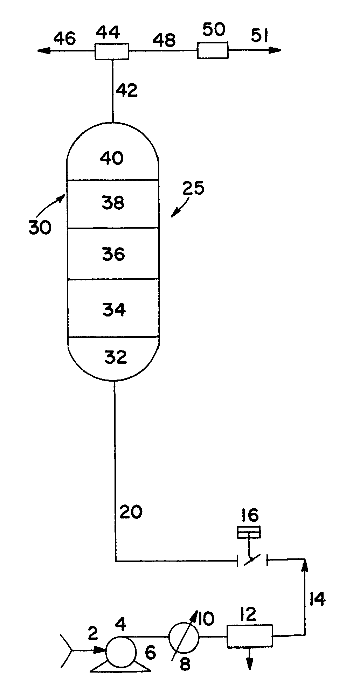

Fig. 1 is a schematic view of one embodiment of the invention showing a process for the production of highly purified gas.

Referring to the drawings, in particularly Fig. 1, there is shown a process for production of purified gas. A feed gas stream, for example atmospheric air, is passed via a line 2 to a compressor 4 wherein the gas is compressed to about 50 to 300 psig. (about 3.75 to 21.5 bar) The compressed gas stream is sent via a line 6 to a heat exchanger 8 wherein it is cooled prior to introduction via line 10 into a water separator 12 to remove liquid water therefrom. The effluent from the water separator 12 is a temperature of from about 5°C to about 70°C and is preferably in the range of about 20°C to about 45°C.

The gas is sent via line 14 through valve 16 and a line 20 to a treatment zone 25 within a single vessel 30 which contains a first adsorption zone 32, a first catalytic zone 34, a second adsorption zone 36, a second catalytic zone 38 and a third adsorption zone 40. In the alternative embodiment, zones 34 and 36 are switched such that the second adsorption zone follows the first adsorption zone 32.

The first adsorption zone 32 contains at least one bed of water-removing adsorbent material such as activated alumina, silica gel, zeolites and/or combinations thereof. Most of the water vapor present in the compressed gas must be removed in order to prevent deactivation of later catalytic layers. The adsorption zone 32 preferably comprises a layer of activated alumina or silica gel and a layer of zeolite such as zeolite 13X or 5A available from UOP, Inc.

The gas stream then enters the first catalytic zone 34 wherein carbon monoxide is converted to carbon dioxide. Preferably the catalyst material is a metal oxide such as nickel oxide or a mixture of the oxides of manganese and copper (typically copper (II)). Most preferably, a hopcalite-type catalyst is employed such as Carulite-300 manufactured by Carus.

The thus treated gas enters the second adsorption layer 36 whereby CO₂ is removed from the gas stream. The adsorbent is selected from activated alumina, silica gel, zeolites and/or combinations of them. Preferably the treated gas contains no more than about 1.0 ppm carbon dioxide. This treated gas thus enters the second catalytic zone 38 wherein the hydrogen present in the gas is converted to water vapor. The catalysts useful in this layer include supported palladium and other noble metal catalysts known in the art. Preferably, this is an eggshell type Pd catalyst such as that available from Engelhard.

The last layer 40 comprises the third adsorption zone wherein water vapor is removed from the treated gas stream. In the embodiment where layers 34 and 36 are exchanged, it is also necessary to have a carbon dioxide adsorbent present in layer 40. Accordingly, the adsorbent can be activated alumina, silica gel, zeolites and/or mixtures thereof.

In an alternative embodiment, an additional adsorbent layer may be added after the carbon dioxide adsorption step. This layer may be an adsorbent such as a zeolite.

The thus treated gas exits the treatment vessel through line 42 and a valve 44 wherein it may be sent for storage via line 46 or through line 48 where it is sent for further processing as by a cryogenic distillation unit through line 48 to a heat exchanger 50 then through line 51 which leads to a typical feed for a cryogenic distillation unit.

The invention will now be described with respect to particular examples thereof which should not be construed as limiting the scope thereof.

### EXAMPLES

### Example 1 - H₂ breakthrough experiment with CO₂ free dry air feed (Run No. 1)

A 25 mm (1") ID vessel packed with 13X/Pd-AA/Carulite/AA (from top to bottom) was used to evaluate the H₂ removal performance of Pd/AA catalyst. AA is activated alumina adsorbent for removing water vapour by adsorption; Carulite is as described above a catalyst comprising cupric oxide and manganese dioxide for oxidising carbon monoxide to carbon dioxide; Pd-AA is a palladium catalyst for oxidising hydrogen to water vapour, the palladium being supported on actuated alumina; and 13 X is zeolite 13 X for adsorbing water vapour and carbon dioxide. The adsorbents and catalysts were first regenerated at 200 °C with a dry air stream free of H₂, CO and CO₂, followed with cooling to ambient temperature with the same regeneration gas stream. A dry air feed stream containing 3186 ppb H₂ and 232 ppb CO was then introduced to the reactor at 18 °C and 1.24 Mpa (180 psia) from the bottom of the bed. H₂ and CO concentrations exiting the Pd/AA catalyst layer were measured by a RGA-5 analyzer to determine the breakthrough time for both H₂ and CO.

### Example 2 - H₂ breakthrough experiment with CO₂ containing dry air feed (Run No. 2)

A similar H₂ breakthrough experiment as described in Example 1 was carried out with CO₂ containing dry air as feed to demonstrate the CO₂ effect on catalyst performance. The feed air stream contains about 400 ppm CO₂, 3128 ppb H₂ and 214 ppb CO. Similar H₂ and CO breakthrough curves were measured. The results obtained in both experimental runs are summarized in Table I below.

**Table I**

| H₂ Catalyst Performance | | |
|---|---|---|
| | Run No. 1 | Run No. 2 |
| Feed Pressure [MPa (psia)] | 1.24 (180) | 1.24 (180) |
| Feed Temp. (°C) | 18 | 18 |
| Feed Velocity [mm/s(ft/s)] | 1.43 (0.47) | 1.43 (0.47) |
| H₂O in Feed (ppm) | <5 | <5 |
| CO in Feed (ppb) | 214 | 232 |
| H₂ in Feed (ppb) | 3128 | 3186 |
| CO₂ in Feed (ppm) | ~400 | <0.1 |
| Analyzer LDL for H₂ (ppb) | 2 | 2 |
| H₂ Breakthrough Time (min.) | 75 | 400 |

As demonstrated in Table I, hydrogen breakthrough time is much longer when carbon dioxide has been removed from the feed gas. Thus when purifying air there is a need to remove most or all of the carbon dioxide upstream of the hydrogen oxidation catalyst. Hence sufficient activated alumina may be provided in the bottom layer to remove carbon dioxide as well as water vapour. Alternatively, an additional layer of CO₂ adsorbent may be employed downstream of the CO-oxidation catalyst layer but upstream of the hydrogen oxidation catalyst.

## Claims

1. A process for producing a gaseous product substantially purified from impurities comprising hydrogen, carbon monoxide, water vapour, and carbon dioxide comprising:
a) removing water vapor from a gaseous feedstream containing impurities;
b) contacting said gaseous feedstream with an oxidation catalyst to convert carbon monoxide to carbon dioxide;
c) removing carbon dioxide from said gaseous feedstream of steps (a) and (b);
d) contacting said gaseous feedstream of step (c) with an oxidation catalyst to convert hydrogen to water vapor; and
e) removing water vapor from said gaseous feedstream of step (d), thereby obtaining said substantially purified gaseous product.

2. A process for producing a gaseous product substantially purified from impurities comprising hydrogen, carbon monoxide, water vapour and carbon dioxide, comprising the steps of:
a) removing water vapor from the gaseous feedstream containing impurities;
b) removing CO₂ from the gaseous feedstream of step (a);
c) contacting the gaseous feedstream of step (b) with an oxidation catalyst to convert CO to CO₂;
d) contacting the gaseous feedstream of step (c) with an oxidation catalyst to convert H₂ to H₂O;
e) removing H₂O and CO₂ from the gaseous feedstream of steps ( c) and (d), thereby obtaining the substantially purified gaseous product.

3. A process as claimed in claim 1 or claim 2, wherein said gaseous feedstream is air.

4. A process as claimed in any one of the preceding claims, wherein said process is a temperature swing adsorption process.

5. A process as claimed in any one of the preceding claims, wherein step (a) comprises contacting said gaseous feed stream with a water vapor removing adsorbent selected from the group consisting of activated alumina, silica gel, zeolites and combinations thereof.

6. A process as claimed in any one of the preceding claims, wherein said carbon dioxide oxidation catalyst is a mixture of manganese and copper oxides.

7. The process as claimed in any one of the preceding claims, wherein the carbon dioxide is removed upstream of the oxidation of the hydrogen by contacting said gaseous feedstream with a carbon dioxide removing adsorbent selected from the group consisting of zeolites, activated alumina, silica gel and combinations thereof.

8. A process as claimed in any one of the preceding claims, wherein the hydrogen oxidation catalyst is a supported palladium noble metal catalyst.

9. A process as claimed in any one of the preceding claims wherein step (e) of removing water vapour or water vapour and carbon dioxide comprises contacting said gaseous feedstream with an adsorbent selected from activated alumina, silica gel, zeolites and combinations thereof.

10. A process as claimed in any one of the preceding claims, further comprising contacting said gaseous feedstream with an adsorbent to remove hydrocarbon and oxides of nitrogen.

11. The process as claimed in claim 1 further comprising the step of cryogenically separating the purified product of the process.

## Patentansprüche

1. Verfahren zum Erzeugen eines gasförmigen Produkts, das im wesentlichen von Verunreinigungen gereinigt ist, die Wasserstoff, Kohlenmonoxid, Wasserdampf und Kohlendioxid umfassen, welches umfasst:
a) Abscheiden von Wasserdampf aus einem gasförmigen Speisestrom, der Verunreinigungen enthält,
b) In-Berührung-Bringen des gasförmigen Speisestroms mit einem Oxidationskatalysator zum Umwandeln von Kohlenmonoxid zu Kohlendioxid,
c) Abscheiden von Kohlendioxid aus dem gasförmigen Speisestrom aus den Schritten (a) und (b),
d) In-Berührung-Bringen des gasförmigen Speisestroms aus Schritt (c) mit einem Oxidationskatalysator zum Umwandeln von Wasserstoff zu Wasserdampf, und
e) Abscheiden aus dem gasförmigen Speisestrom aus Schritt (d), wodurch das im wesentlichen gereinigte gasförmige Produkt erhalten wird.

2. Verfahren zum Erzeugen eines gasförmigen Produkts, das im wesentlichen von Verunreinigungen gereinigt ist, die Wasserstoff, Kohlenmonoxid, Wasserdampf und Kohlendioxid umfassen, mit folgenden Schritten:
a) Abscheiden von Wasserdampf aus den Verunreinigungen enthaltenden gasförmigen Speisestrom,
b) Abscheiden von CO₂ aus dem gasförmigen Speisestrom aus Schritt (a),
c) In-Berührung-Bringen des gasförmigen Speisestroms aus Schritt (b) mit einem Oxidationkatalysator zum Umwandeln von CO zu CO₂,
d) In-Berührung-Bringen des gasförmigen Speisestroms aus Schritt (c) mit einem Oxidationskatalysator zum Umwandeln von H₂ zu H₂O,
e) Abscheiden von H₂O und CO₂ aus dem gasförmigen Speisestrom der Schritte (c) und (d), wodurch das im wesentlichen gereinigte gasförmige Produkt erhalten wird.

3. Verfahren nach Anspruch 1 oder Anspruch 2, wobei der gasförmige Speisestrom Luft ist.

4. Verfahren nach einem der vorhergehenden Ansprüche, wobei das genannte Verfahren ein Temperaturwechsel-Adsorptionsprozeß ist.

5. Verfahren nach einem der vorhergehenden Ansprüche, wobei der Schritt (a) das In-Berührung-Bringen des gasförmigen Speisestroms mit einem Wasserdampf abscheidenden Adsorptionsmittel umfasst, das aus der Gruppe aktiviertes Aluminiumoxid, Silikagel, Zeolite und Kombinationen hiervon ausgewählt ist.

6. Verfahren nach einem der vorhergehenden Ansprüche, wobei der Kohlendioxid-Oxidationskatalysator ein Gemisch aus Mangan- und Kupferoxiden ist.

7. Verfahren nach einem der vorhergehenden Ansprüche, wobei Kohlendioxid stromauf der Oxidation des Wasserstoffs durch In-Berührung-Bringen des gasförmigen Speisestroms mit einem Kohlendioxid abscheidenden Adsorptionsmittel abgeschieden wird, das aus der Gruppe Zeolite, aktiviertes Aluminiumoxid, Silikagel und Kombinationen hiervon ausgewählt ist.

8. Verfahren nach einem der vorhergehenden Ansprüche, wobei der Wasserstoff-Oxidationskatalysator ein unterstützter Palladium-Edelmetallkatalysator ist.

9. Verfahren nach einem der vorhergehenden Ansprüche, wobei der Schritt (e) des Abschiedens von Wasserdampf oder Wasserdampf und Kohlendioxid das In-Berührung-Bringen des gasförmigen Speisestroms mit einem Adsorptionsmittel umfasst, das aus aktiviertem Aluminiumoxid, Silikagel, Zeoliten und Kombinationen hiervon ausgewählt ist.

10. Verfahren nach einem der vorhergehenden Ansprüche, das weiter das In-Berührung-Bringen des gasförmigen Speisestroms mit einem Adsorptionsmittel zum Abscheiden Kohlenwasserstoff und Stickstoffoxiden umfasst.

11. Verfahren nach Anspruch 1, das weiter den Schritt des kryogenen Trennens des gereinigten Produkts des Verfahrens umfasst.

## Revendications

1. Procédé de production d'un produit gazeux essentiellement purifié des impuretés comprenant l'hydrogène, le monoxyde de carbone, la vapeur d'eau et le dioxyde de carbone, comprenant :
(a) l'extraction de vapeur d'eau d'un courant d'alimentation gazeux contenant des impuretés ;
(b) la mise en contact dudit courant d'alimentation gazeux avec un catalyseur d'oxydation pour convertir le monoxyde de carbone en dioxyde de carbone ;
(c) l'extraction du dioxyde de carbone dudit courant d'alimentation gazeux des étapes (a) et (b) ;
(d) la mise en contact dudit courant d'alimentation gazeux de l'étape (c) avec un catalyseur d'oxydation pour convertir l'hydrogène en vapeur d'eau ; et
(e) l'extraction de la vapeur d'eau dudit courant d'alimentation gazeux de l'étape (d), pour obtenir ainsi ledit produit gazeux essentiellement purifié.

2. Procédé de production d'un produit gazeux essentiellement purifié des impuretés comprenant l'hydrogène, le monoxyde de carbone, la vapeur d'eau et le dioxyde de carbone, comprenant les étapes de :
(a) extraction de la vapeur d'eau du courant d'alimentation gazeux contenant des impuretés ;
(b) extraction du CO₂ du courant d'alimentation gazeux de l'étape (a) ;
(c) mise en contact du courant d'alimentation gazeux de l'étape (b) avec un catalyseur d'oxydation pour convertir le CO en CO₂ ;
(d) mise en contact du courant d'alimentation gazeux de l'étape (c) avec un catalyseur d'oxydation pour convertir H₂ en H₂O ;
(e) extraction d'H₂O et de CO₂ du courant d'alimentation gazeux des étapes (c) et (d), pour obtenir ainsi ledit produit gazeux essentiellement purifié.

3. Procédé selon la revendication 1 ou la revendication 2, dans lequel ledit courant d'alimentation gazeux est de l'air.

4. Procédé selon l'une quelconque des revendications précédentes, dans lequel ledit procédé est un procédé d'adsorption modulée en température.

5. Procédé selon l'une quelconque des revendications précédentes, dans lequel l'étape (a) comprend la mise en contact dudit courant d'alimentation gazeux avec un adsorbant extrayant la vapeur d'eau choisi dans le groupe composé de l'alumine active, du gel de silice, des zéolithes et de combinaisons de ceux-ci.

6. Procédé selon l'une quelconque des revendications précédentes, dans lequel ledit catalyseur d'oxydation du dioxyde de carbone est un mélange d'oxydes de manganèse et de cuivre.

7. Procédé selon l'une quelconque des revendications précédentes, dans lequel le dioxyde de carbone est extrait en amont de l'oxydation de l'hydrogène par mise en contact dudit courant d'alimentation gazeux avec un adsorbant extrayant le dioxyde de carbone choisi dans le groupe composé des zéolithes, de l'alumine active, du gel de silice, et de combinaisons de ceux-ci.

8. Procédé selon l'une quelconque des revendications précédentes, dans lequel le catalyseur d'oxydation de l'hydrogène est un catalyseur supporté au palladium comme métal noble.

9. Procédé selon l'une quelconque des revendications précédentes, dans lequel l'étape (e) d'extraction de la vapeur d'eau ou de la vapeur d'eau et du dioxyde de carbone comprend la mise en contact dudit courant d'alimentation gazeux avec un adsorbant choisi parmi l'alumine active, le gel de silice, les zéolithes et des combinaisons de ceux-ci.

10. Procédé selon l'une quelconque des revendications précédentes, comprenant de plus la mise en contact dudit courant d'alimentation gazeux avec un adsorbant pour éliminer les hydrocarbures et les oxydes d'azote.

11. Procédé selon la revendication 1, comprenant de plus l'étape de séparation cryogénique du produit purifié obtenu dans le procédé.
